# EUROPEAN PATENT SPECIFICATION

(11) **EP 3 707 444 B1**
(45) Date of publication and mention of the grant of the patent: **02.02.2022**
(21) Application number: 18811067.0
(22) Date of filing: 31.10.2018
(51) Int. Cl.: F24S 25/615

(54) **ASSEMBLY FOR CONNECTING OR FASTENING ACCESSORIES TO BUILDING CLADDING PANELS AS WELL AS BUILDING LINING UNIT**
ANORDNUNG ZUM VERBINDEN ODER BEFESTIGEN VON ZUBEHÖR AN GEBÄUDEVERKLEIDUNGSPLATTEN SOWIE GEBÄUDEVERKLEIDUNGSEINHEIT
ENSEMBLE POUR CONNECTER OU FIXER DES ACCESSOIRES À DES PANNEAUX DE BARDAGE AINSI QU'UNITÉ DE REVÊTEMENT DE BÂTIMENT

(30) Priority: 10.11.2017 IT 201700128643
(43) Date of publication of application: 16.09.2020
(73) Proprietor: ISCOM S.p.A., 37026 Pescantina (VR) (IT)
(72) Inventor: MENEGOLI, Mauro, 37026 Pescantina (Verona) (IT)
(74) Representative: Feltrinelli, Secondo Andrea
(86) International application number: PCT/IB2018/058548
(87) International publication number: WO 2019/092554

(56) References cited:
- DE-U1-202007 002 252
- JP-A- 2014 105 533
- US-A1- 2014 086 680
- US-B1- 6 256 934
- US-B1- 6 647 671

## Description

### TECHNICAL FIELD OF THE INVENTION

The present invention regards an assembly for connecting or fastening accessories to building cladding panels as well as a building lining unit comprising one or more panels and a connecting or fastening assembly.

### STATE OF THE PRIOR ART

Brackets or plates connected both to the panels and to the accessories by means of screws or plates are usually used in order to fasten the accessories to building cladding panels.

Such solutions entail the drilling of the panels, with the ensuing reduction of the resistance and solidity thereof.

Furthermore, these applications are carried out at a connection portion between adjacent panels and for example comprise a bracket bent so as to have two base portions, each bolted to a portion of a respective panel of the connection portion.

This determines a locking of the connection portion at the base thereof, which entails a hindrance to the thermal dilation of the panels of the connection portion.

Other known solutions regard accessories that are fixed to the building cladding panels by means of interference, but which are connected or closed with respect to each other by means of brackets or plates fastened using screws or bolts. They reveal various drawbacks.

US2014086680A1, US6256934B1, US6647671B1, DE202007002252U1 and JP2014105533A describe solutions according to the state of the prior art.

### OBJECTS OF THE INVENTION

An object of the present invention is to provide a new assembly for connecting or fastening accessories to building cladding or lining panels or slabs.

Another object of the present invention is to provide a connecting or fastening assembly as mentioned above that can be assembled in a simple and quick manner.

Another object of the present invention is to provide a connecting or fastening assembly as mentioned above that can be assembled without requiring drilling into the panel or panels to which it is applied.

Another object of the present invention is to provide a connecting or fastening assembly that can be easily assembled on a panel or on the superimposed ends of two adjacent panels.

Another object of the present invention is to provide a connecting or fastening assembly that does not hinder the sliding by thermal dilation of the panels to which it is applied.

Another object of the present invention is to provide a connecting or fastening assembly that can be disassembled from a panel or from the superimposed ends of two adjacent panels.

Another object of the present invention is to provide a new building lining unit comprising one or more panels and a connecting or fastening assembly.

The objects indicated above with reference to a connecting or fastening assembly also apply to a building lining unit according to the present invention.

According to a first aspect of the invention, a connecting or fastening assembly according to claim 1 is provided for.

According to a second aspect of the invention, a connecting or fastening assembly according to claim 4 is provided for.

According to another aspect of the invention, a building lining unit according to claim 13 is provided for.

According to another aspect of the invention, a method according to claim 15 is provided for.

The dependent claims refer to preferred and advantageous embodiments of the invention.

### BRIEF DESCRIPTION OF THE DRAWINGS

Other characteristics and advantages of the invention will be more apparent from the description of an embodiment of an assembly or a unit, illustrated by way of example in the attached drawings wherein:
- figure 1 is a perspective view of an assembly and a unit according to the present invention;
- figure 2 is a perspective view of an assembly and a unit according to the present invention;
- figures 3 and 4 are exploded views of figure 1 and 2 respectively;
- figures 5 and 6 are respectively front and perspective views of a tightening and fastening component of an assembly according to the present invention;
- figures 7 and 8 are respectively front and perspective views of a gripping and coupling component of an assembly according to the present invention;
- figures 9 to 12 are views respectively similar to figures 1 to 4 of another embodiment of an assembly and a unit according to the present invention;
- figures 13 and 14 are respectively perspective and exploded views of another embodiment of an assembly according to the present invention;
- figures 15 to 26 illustrate the assembly and the unit of figures 1 to 4 with respective accessories.

In the attached drawings, identical parts or components are distinguished using the same reference numbers.

### EMBODIMENTS OF THE INVENTION

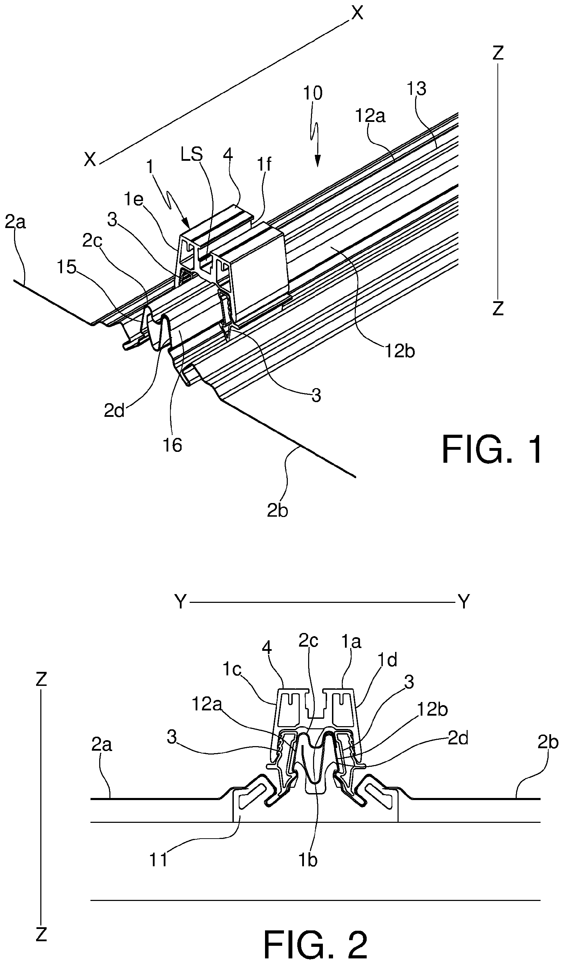

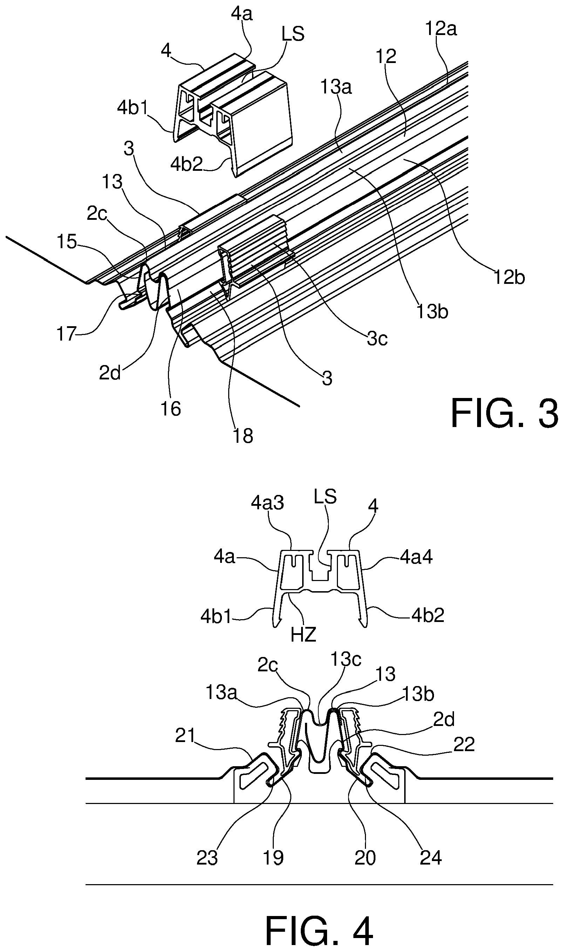

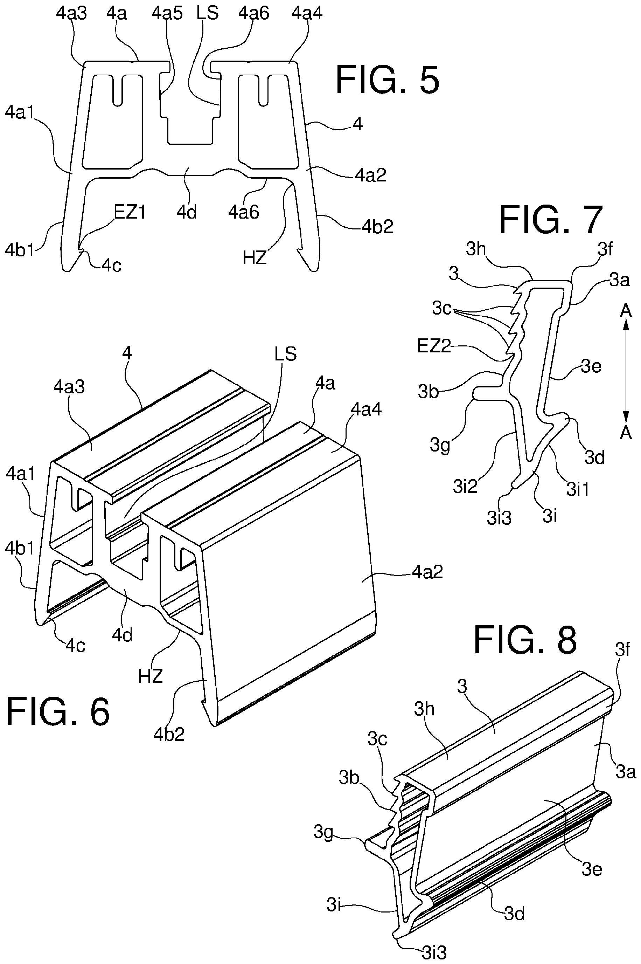

Initially with reference to figures 1 to 8 an assembly 1 according to the present invention for connecting or fastening accessories, such as solar panels, snow guards, life lines, gangways, faraday cages, light strips etcetera to panels or slabs 2a, 2b for obtaining a building cladding or lining has been illustrated.

The cladding or lining can be effectively applied on any type of roof or surface without any limitation, even roofs with very large dimensions as well as non-flat roofs.

The assembly 1 comprises at least two separate or different gripping and coupling components 3, i.e. not obtained together as a single piece, which have - in use - an inner face 3a arranged to abut with a respective end of a panel or slab 2a, 2b or superimposed edges or ends 2c, 2d of two adjacent panels or slabs 2a, 2b, and, in use, an outer face 3b. As regards this, at least two gripping and coupling components 3 of an assembly 1 have the respective inner, in use, face 3a faced towards each other, so that such components 3 are opposite or opposed with respect to each other, as described hereinafter.

The assembly 1 has a top 1a which, in use, is the part distant from the panel or from the panels 2a, 2b or better from the superimposed ends 2c, 2d of the panels 2a, 2b on which the assembly 1 is applied, a bottom 1b, which, in use, is the part close to or at contact with the panel or panels 2a, 2b or better with the superimposed ends 2c, 2d thereof, and it also has flanks or sides 1c, 1d which connect the top 1a and the bottom 1b.

The assembly 1 also comprises a front 1e and a rear 1f, i.e. the two faces or surfaces substantially orthogonal to the other components of the assembly described above, as well as orthogonal to the longitudinal extension of the panels 2a, 2b or better of the superimposed ends 2c, 2d thereof.

At least one tightening and fastening component 4 arranged to engage respective engagement portions 3c of the two gripping and coupling components 3, so as to tighten them with respect to each other and close to the respective ends of a panel 2a, 2b or of superimposed ends 2c, 2d of two adjacent panels 2a, 2b, is also provided for in the assembly 1.

The engagement portions 3c are delimited on the outer face 3b or in a zone between the outer face 3b and the inner face 3a.

Furthermore, it will be observed that the tightening and fastening component 4 has at least one part arranged to allow the fastening of an accessory, which, according to a preferred but non-limiting version, will be described better hereinafter.

The tightening and fastening component 4, comprises an intermediate body 4a as well as at least two fins 4b1, 4b2 each extending starting from a respective portion or end 4a1, 4a2 of the intermediate body 4a, so as to define between them a housing zone HZ for the gripping and coupling components 3 close to a panel 2a, 2b or to superimposed ends 2c, 2d of two adjacent panels 2a, 2b. As regards this, each fin 4b1, 4b2 has means 4c for engaging engagement portions 3c of a respective gripping and coupling component 3.

If desired, the fins 4b1, 4b2 have inclined configurations so that the housing zone HZ is slightly diverging moving away from the intermediate body 4a.

Furthermore, the fins 4b1, 4b2 can be slightly elastic so as to facilitate the insertion or the assembly.

The fins 4b1, 4b2 can actually have one or more of the following functions:
- guiding the insertion of the tightening and fastening component 4 above and wrapping the gripping and coupling components 3,
- actually, transforming the force of insertion into tightening force on the gripping and coupling components 3, and/or
- supporting the gripping and coupling components 3.

Thus, the fins 4b1, 4b2 advantageously constitute guide components for the tightening and fastening component 4 on the gripping and coupling components 3 and/or for tightening such components 3 towards the panel(s) 2a, 2b and/or the support of the gripping and coupling components 3.

According to the first aspect of the invention, the engagement means 4c are arranged to snap-engage engagement portions 3c.

More in particular, the engagement means 4c can engage the engagement portions 3c so as to pull the gripping and coupling components 3 in the direction of the intermediate body 4a, as better outlined hereinafter.

Advantageously, the engagement means 4c constitute a portion or part of the fins 4b1, 4b2 and thus they are obtained as a single piece with the latter.

Preferably, the engagement means comprise first teeth 4c, while the engagement portions comprise second teeth 3c; in this case, the first engagement zone EZ1 of the second teeth 3c, defined by the first teeth 4c, is tapered moving apart from the intermediate body 4a, while the second engagement zone EZ2 of the first teeth 4c, defined by the second teeth 3c, is tapered in an approaching direction to the intermediate body 4.

Naturally, the configuration and inclination of the teeth 3c, 4c could be different as a function of the configuration of the panels 2a, 2b or of the superimposed ends 2c, 2d thereof.

The first 4c and second 3c teeth, just like the respective engagement zones EZ1, EZ2 preferably extend in the longitudinal direction or from the front 1e to the rear If.

The gripping and coupling components 3 could comprise a plurality of teeth 3c extending in the longitudinal direction or from the front 1e to the rear If and delimited one after the other along the outer face 3b. Alternatively or additionally thereto, the tightening and fastening component 4 could comprise a plurality of teeth 4c extending in the longitudinal direction or from the front 1e to the rear If.

Furthermore, even only one tooth 4c for each fin 4b1, 4b2 and/or only one second tooth 3c could be provided for.

Naturally, the engagement portions 3c and the engagement means 4c may not comprise the teeth but be configured differently, for example as relief zones and recessed zones.

As regards the gripping and coupling components 3 in detail, the inner face 3a thereof may comprise at least one protuberance 3d arranged to fit into and push against with a groove (to be addressed further hereinafter) defined by a panel 2a, 2b or by a superimposed end 2c, 2d of two adjacent panels 2a, 2b.

The protuberance 3d of a first gripping and coupling component 3 preferably extends in a direction towards a gripping and coupling component 3 opposite to the first and, in use, towards the intermediate body 4a of the tightening and fastening component 4.

The configuration and inclination of the protuberance 3d could be different as a function of the configuration of the panels 2a, 2b or of the superimposed ends 2c, 2d thereof. Furthermore, instead of a protuberance, a groove could be provided, should the panels 2a, 2b or the superimposed ends 2c, 2d thereof delimit a projecting zone.

If desired, the inner face 3a of the two gripping and coupling components 3 comprises, from a side, in use, distal from the intermediate body 4a, to a side, in use, proximal to the intermediate body 4a, the protuberance 3d, then a recessed zone 3e and a zone for example flat, which is raised or offset 3f with respect to the recessed zone 3e so that the distance between the raised zones 3f of the two gripping and coupling components 3 is less than the distance between the recessed zones 3e of such gripping and coupling components 3.

The raised zones 3f could be slightly inclined with respect to a direction from the top 1a to the bottom 1b, in particular with a portion proximal to the top 1a closest to the other raised zone 3f and a portion distal from the top furthest from the other raised zone 3f, so that the zone between raised zones 3f of two gripping and coupling components 3 is tapered in the direction from the bottom 1b to the top 1a of the assembly.

The outer face 3b of the two gripping and coupling components 3 instead comprises, from a side, in use, proximal to the intermediate body 4a, to a side, in use, distal therefrom the engagement portions 3c, for example one or a plurality of second teeth 3c and then a shoulder 3g rising moving apart from the main body of the respective gripping and coupling components 3 and, if desired, substantially aligned to the direction from one side 1c to the other 1d of the assembly 1.

The inner face 3a and the outer face 3b are connected by means of a first wall 3h, for example of the top, if desired substantially flat and, for example, substantially aligned to the direction from one side 1c to the other 1d of the assembly 1 as well as by means of a second wall 3i, if desired a bottom wall, for example substantially V-shaped.

The second substantially V-shaped wall 3i may comprise a first segment 3i1 extending from the protuberance 3d and a second segment 3i2 extending from the zone of the engagement portions 3c or, if provided for, of the shoulder 3g, the first segment 3i1 having an inclination between about 20° and 60°, if desired between 20° and 40° with respect to the direction A-A from the top 1a to the bottom 1b of the respective gripping and engagement components 3, while the second segment 3i2 has an inclination between about 0° and about 20°, if desired between 0° and 10° with respect to such direction A-A. The first 3i1 and the second 3i2 segment define a vertex 3i3 of the second wall 3i, which is possibly tip-shaped.

Usually, the assembly 1 comprises two gripping and coupling components 3 substantially equal arranged in a substantially symmetrical position with respect to a symmetry plane of the assembly in which the directions lie from the bottom 1a to the top 1b and from the front 1e to the rear 1f.

On the contrary, as regards the tightening and fastening component 4, the respective intermediate body 4a delimits at least one longitudinal seat LS open in the direction opposite to the housing zone HZ.

If desired, the intermediate body 4a comprises two tubular or block-like segments 4a3, 4a4 defining the longitudinal seat LS between them, the tubular or block-like segments 4a3, 4a4 being bridge-connected by means of a bottom wall 4d defining together with fins 4b1, 4b2 the housing zone HZ.

The longitudinal seat LS may have a U-shaped configuration, but it can also have portions with different width. In this case, the extension and the configuration of the portions of the longitudinal seat LS is defined by means of the configuration of the tubular or block-like segments 4a3, 4a4 or better of the respective wall 4a5, 4a6 for delimiting the longitudinal seat LS.

The bottom wall 4d further comprises a bottom portion 4a6 of the tubular or block-like segments 4a3, 4a4.

Preferably, the components 3 and 4 have a determined constant or unvaried configuration in the longitudinal direction or from the front 1e to the rear If of the assembly.

Regarding this, the gripping and coupling components 3 preferably comprise an extruded component and potentially hollow in the direction from the front 1e to the rear If. Furthermore, should the gripping and coupling components 3 comprise a hollow component, they could have reinforcement or stiffening inner septa or walls.

Still with respect to such aspect, the tightening and fastening component 4 is preferably made of a single piece; if desired, the tightening and fastening component 4 comprises an extruded component in the direction from the front 1e to the rear If.

Of course, the components 3 and 4 could also be obtained by means of other methods, such as moulding.

Clearly, an assembly 1 according to the present invention could comprise two or more gripping and coupling components 3 for only one tightening and fastening component 4, or several tightening and fastening components 4 for a pair of gripping and coupling components 3 or several tightening and fastening components 4 for two or more gripping and coupling components 3 or pairs of gripping and coupling components 3.

Furthermore, an assembly 1 for each gripping and coupling component 3 provides for at least one gripping and coupling component 3 opposite or opposed, i.e. arranged, in use, on a side opposite thereto with respect to a symmetry plane of the assembly in which the directions from the bottom 1a to the top 1b and from the front 1e to the rear If lie or with respect to a rib or ridge 12 of the panels 2a, 2b to be addressed hereinafter.

Two opposite gripping and coupling components 3 are arranged to tighten between each other, as a function of the action of the tightening or fastening component 4, a rib or ridge 12 of two panels 2a, 2b.

Preferably, each gripping and coupling component 3 is aligned along a direction from one side 1c to the other 1d of an assembly 1 to an opposite or opposed gripping and coupling component 3 in the direction indicated above, with the inner faces 3a of such components being faced one towards the other, the outer faces 3b facing towards an opposite direction and the aligned sides or flanks. Alternatively, two opposite gripping and coupling components 3 may not be aligned in the direction indicated now, or two opposite or opposed gripping and coupling components 3 - not aligned with the first gripping and coupling component - could potentially be provided for a first gripping and coupling component 3.

A building lining unit 10 comprising at least one panel 2a, 2b and a connecting or fastening assembly 1 according to the present invention, with the two gripping and coupling components 3 tightened by the tightening and fastening component 4 close to the respective portions of a panel or superimposed ends 2c, 2d of two adjacent panels or slabs 2a, 2b, represent an object of the present invention too.

More in particular, two panels or slabs 2a, 2b comprise respective superimposed or joined ends 2c, 2d, the panels being fixable to the surface of the roof or to a surface to be clad or lined by means of one or a plurality of brackets 11.

More in particular, the cladding or lining of the roof or surface normally comprises a plurality of panels and thus a plurality of superimposed or joined edges or ends 2c, 2d of adjacent slabs or panels 2a, 2b, which will be arranged aligned in rows and spaced at regular intervals.

The number of rows of joined edges or ends 2c, 2d required to obtain a cladding or lining of a determined roof or surface obviously depends on the dimensions of the roof or of the surface and on the particular characteristics thereof.

The joined ends 2c, 2d comprise a first end or a first lateral edge 2c of a first panel or slab 2a and a second end or a second lateral edge 2d of another or second panel or slab 2b adjacent and subsequent to the first.

Preferably, the first slab 2a and the second slab 2b are couplable, with the respective first lateral edge 2c and the second lateral edge 2d to a support bracket 11 so as to obtain a continuous surface.

As regards such aspect, the lining or cladding of a roof or surface comprises at least one bracket 11, that can be fixed to the roof or to the surface to be clad or lined.

More in particular, the lining normally comprises a plurality of brackets 11 arranged aligned in rows and spaced at regular intervals.

The number of rows of brackets 11 required to obtain a cladding or lining of a determined roof obviously depends on the dimensions of the roof and on the particular characteristics thereof.

The panel or slab 2a, 2b or the coupled or superimposed lateral ends or edges 2c, 2d of adjacent panels define ribs or ridges 12 with extension longitudinal or parallel to the front 1e-rear If direction of the assembly or assemblies 1 and thus of the unit 10.

Furthermore, the panels 2a, 2b could be all equal and each have a first end 2c arranged to engage or superimpose a second end 2d of a first adjacent panel and (have) another end 2d configured as the second end 2d of a first adjacent panel engaged by the first end 2c thereof and arranged to be superimposed by a first end 2c of a second adjacent panel.

In order to define the configuration of such ribs 12, the longitudinal extension direction of the panel or slab 2a, 2b or of the coupled or superimposed lateral edges 2c, 2d of two panels 2a, 2b will be considered as the first direction x-x, the direction from one side to the other of the rib 12 as the second direction y-y, which is orthogonal to the first direction, and the direction orthogonal to the first x-x and to the second y-y direction and which goes from the top of the ridge 12 towards the base thereof connected to the remaining parts of the panels 2a, 2b as the third direction z-z .

Now, a rib 12 has a transversal section taken along a plane orthogonal to the first direction x-x and in which the second y-y and the third z-z direction lie, constant along the entire longitudinal extension of the panels 2a, 2b or along the first direction x-x.

The transversal section of the outer surface of a rib 12, i.e. the surface facing away from the wall to be clad, starting from the centreline and towards each side has a top portion 13, from which a first segment 15, 16 departs towards the base, if desired slightly curved or substantially flat, for example slightly inclined with respect to a plane on which the first x-x and the third y-y direction lie.

In use, the third direction z-z corresponds to the direction from the top 1a to the bottom 1b of an assembly 1, the second direction y-y corresponds to the direction from one side 1c to the other 1d of an assembly 1, while the first direction x-x corresponds to the direction from the front 1e to the rear If of an assembly 1.

The top portion 13 could delimit a recessed intermediate section 13c. Furthermore, the top portion 13 could also be curved with concavity facing towards the base, or have two curved sections 13a, 13b with concavity facing towards the base delimiting a recessed section 13c between them.

The first segment 15, 16 can terminate with an inner shoulder or defining a groove 17, 18 for the engagement with the protuberance 3d or a projecting zone for engagement with a groove of a gripping and coupling component 3.

A second section 19, 20, for example slightly curved with overall inclination with respect to a plane on which the first x-x and the third z-z direction, greater with respect to the first segment 15, 16, lie, can depart starting from a section defining a groove 17, 18.

Continuing in the direction moving apart with respect to the centreline, the rib 12 may have, both from one side to the other, an arched segment 21, 22 defining with the second segment 19, 20 a recessed portion 23, 24.

Clearly, the rib 12 could also not be symmetrical with respect to a plane passing through the first x-x and the third z-z direction.

As it will be observed, the conformations respectively of the terminal portion of the lateral edges 2c, 2d could be such to provide an accurate superimposition between the parts, which guarantees a continuous lining surface so as to avoid the penetration of water or foreign bodies.

In a unit 10 according to the present invention, one or more assemblies 1 are mounted on a respective rib or ridge 12, with at least two gripping and coupling components 3 arranged one on the side opposite to the other with respect to the ridge 12 and at least one tightening and fastening component 4 mounted, preferably snapmounted for example like a plug or cap, on gripping and coupling components 3 so as to tighten them against the rib 12.

If desired, each gripping and coupling component 3 is mounted and pressed against a respective first segment 15, 16, if desired with the respective protuberance 3d mounted in the groove 17, 18 or a projecting zone of an edge 2c, 2d mounted in a groove of a gripping and coupling component 3. Furthermore, if the gripping and coupling components 3 comprise a second wall 3i, for example V-shaped, then the same can be mounted against the second segment 19, 20, if provided, and with the vertex 3i3 partly housed in a recessed portion 23, 24, if provided.

Preferably, if the gripping and coupling components 3 comprise a raised or offset zone 3f, then the same can be at contact with the first segment 15, 16, while the recessed zone 3e does not come into contact with such segment 15, 16.

With such structure, in order to mount the assembly 1 on a rib or ridge 12, then one or more gripping and coupling components 3 can be firstly arranged resting against a respective side of the rib 12, so that the inner face 3a of at least one gripping and coupling component 3 rests against a first side 12a of the rib 12 and the inner face 3a of at least another gripping and coupling component 3 rests against a second side 12a of the rib 12; this can for example be obtained by firstly inserting the protuberances 3d into the grooves 17, 18 or projecting zones of an edge 2c, 2d into a groove of a gripping and coupling component 3, and thus carrying the raised zones 3f resting against a respective portion of the first segment 15, 16.

At this point, the tightening and fastening component 4 is carried with the respective housing zone HZ facing towards the gripping and coupling components 3 and thus the tightening and fastening component 4 is inserted around the latter, so as to determine the engagement of the engagement portions 3c and the engagement means 4c.

Thus, according to the non-limited embodiment illustrated in the figures, a further insertion of the protuberances 3d into the grooves 17, 18 or of the projecting zones into the grooves as well as a further tightening of the inner faces 3a or of the raised zones 3f against a respective portion of the first segment 15, 16 is determined.

Naturally, several assemblies can be applied 1 for each rib 12 as indicated above.

As regards the bracket 11, it can comprise a configuration such to snap or shape or fittingly-engage the slabs or panels 2a, 2b or better the face thereof facing, in use, towards the wall to be clad or lined.

As previously mentioned, a cladding or lining according to the present invention can consist of a plurality of first slabs 2a and second slabs 2b, with pre-set length, coupled to brackets or joints 11 positioned in one or more rows and regularly spaced from each other, to obtain a continuous surface.

Thus, the lining or cladding comprises, in a preferred embodiment, a plurality of brackets 11 arranged in a row and equally spaced from each other, and a plurality of first and second slabs 2a, 2b coupled to the brackets 11 in an alternating fashion.

Of course, the dimensions of the slabs 2a, 2b and the number thereof may vary depending on the specific application needs.

In a unit according to the present invention, through holes obtained in the panel or panels for the passing through or fixing of screws or bolts arranged to fasten or connect components of the assembly to the panels, are not provided.

As regards the configuration of the panels or slabs, of the bracket(s) as well as the engagement thereof with panels, reference shall also be made to the international patent application published under n° WO2014181153A1.

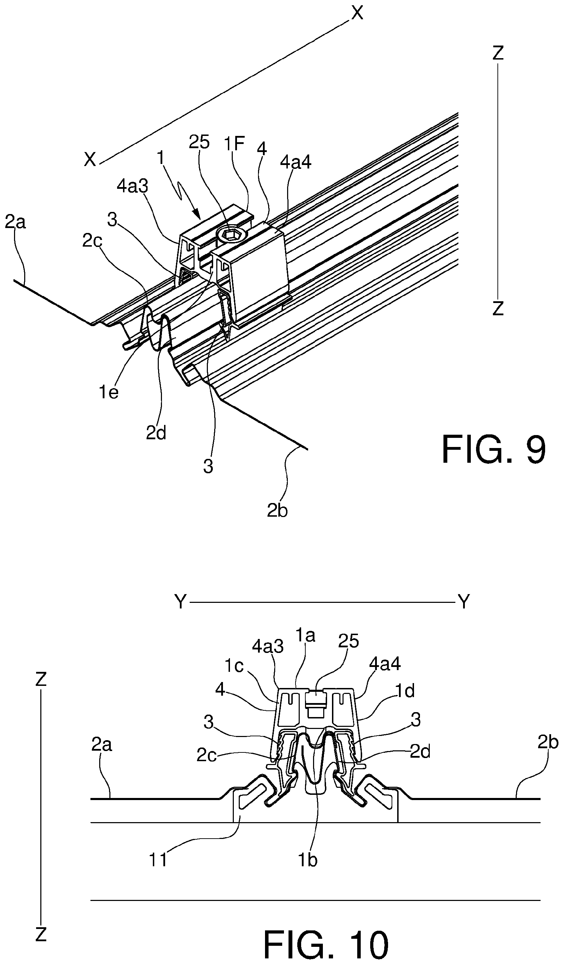

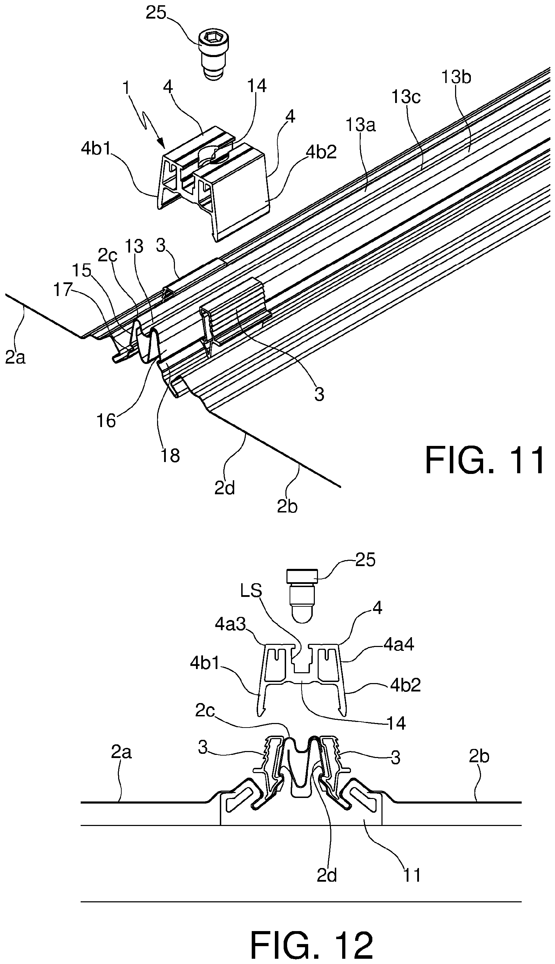

Now, with reference to figures 9 to 12, another embodiment of the assembly according to the present invention similar to the example described now, but also comprising at least one first grub screw or screw or bolt 25 that can be fitted into the longitudinal seat LS and into a through hole 14 formed in the bottom wall 4d is illustrated, the first grub screw or screw or bolt 25 being arranged to deform the panel or the ends 2c, 2d of adjacent panels 2a, 2b so as to increase the tightening action of the gripping and coupling components 3 one towards the other close to the portion of the respective ends 2c, 2d.

More in particular, the first grub screw or screw or bolt 25 could engage the top portion 13 and more in particular the recessed intermediate section 13c, if provided, thereof so as to deform the rib 12 or better the portions thereof towards the external or better towards and abutting against the gripping and coupling components 3.

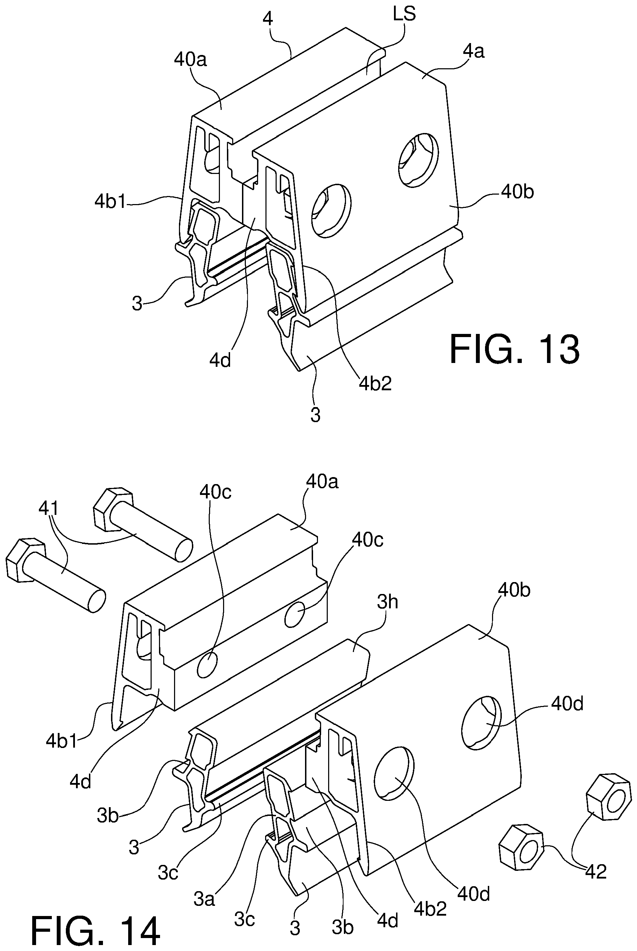

Now, as regards figures 13 and 14, they illustrate an assembly similar to the ones described above, but with a tightening and fastening component 4 comprising at least two parts 40a-40b that can be approached or moved apart from each other between a moved-apart inoperative position (see figure 14) and at least one approached or fitted tightening position (see figure 13) of two gripping and coupling components 3 one towards the other and close to the respective portions of a panel 2a, 2b or superimposed ends 2c, 2d of two adjacent panels 2a, 2b. Such assembly 1 further comprises at least one locking component in approached position of the two parts 40a, 40b or at least one component 41, 42 for the controlled approaching of the two parts towards the approached tightening position.

In this case, the locking component in approached position or the controlled approaching component comprises one, two or more screws or bolts 41 each of which can be inserted into aligned through holes 40c, 40d each formed in a respective part 40a, 40b, the screws or bolts being adjustably lockable in position, for example by means of nuts 42.

With reference to such aspect, according to the non-limiting embodiment illustrated in the figures, each part 40a, 40b of the intermediate body 4a comprises a fin 4b1, 4b2 and half or a portion of the intermediate body 4a. Each fin 4b1, 4b2 actually wraps and pushes the outer face 3b of a respective gripping and coupling component 3.

Naturally, the parts 40a, 40b could be mutually symmetrical or non-symmetrical with respect to a symmetry plane of the tightening and fastening component 4.

More in particular, each part 40a, 40b may comprise a respective tubular or block-like segment 4a3, 4a4 and a section of the bottom wall 4d.

Two gripping and coupling components 3 can be tightened with a such assembly, by arranging them close to a respective portion of an end of a panel 2a, 2b or superimposed ends 2c, 2d of two panels or slabs 2a, 2b and thus arranging the parts 40a, 40b of the tightening and fastening component 4, in a moved-apart inoperative position, wrapping or around the gripping and coupling components 3, and then using or inserting the locking component in approached position or the controlled approaching component 41, 42, this possibly being carried out by inserting the bolt/s 41 into aligned through holes 40c, 40d formed in the parts 40a, 40b and thus locking it/them and pulling it/them by means of a respective bolt 42. The parts 40a, 40b of the tightening and fastening component 4 are thus tightened close to the gripping and coupling components 3, each part 40a, 40b preferably close to a respective component 3, so as to press them against the sides of the rib 12 and potentially they are abutted one against the other.

When the at least one locking component in approached position or the at least one controlled approaching component 41, 42 is actuated, the fins 4b1, 4b2, which actually wrap the gripping and coupling components 3, push on the outer face 3b of the gripping and coupling components 3 so as to tighten them close to the respective portions of a panel 2a, 2b or superimposed ends 2c, 2d of two adjacent panels 2a, 2b.

As it will be clearer, the approaching-moving apart of the two parts 40a-40b of the tightening and fastening component 4 could be obtained in a direction parallel to the approaching-moving apart direction of the two gripping and coupling components 3 or even differently. As regards this, the parts 40a-40b could also be pivoted to each other and approached through relative angular displacement or a combination of the displacements mentioned above.

Naturally, an assembly as described now could also be mounted as described with reference to an assembly according to figures 1 to 12, this potentially being obtained by mounting or assembling the parts 40a, 40b of the tightening and fastening component 4 before bringing it into engagement with the gripping and coupling components 3.

If on the one hand the embodiment described now would entail longer assembly steps, on the other it would entail the possibility of easily demounting the assembly by acting on the nuts 40c, 40d.

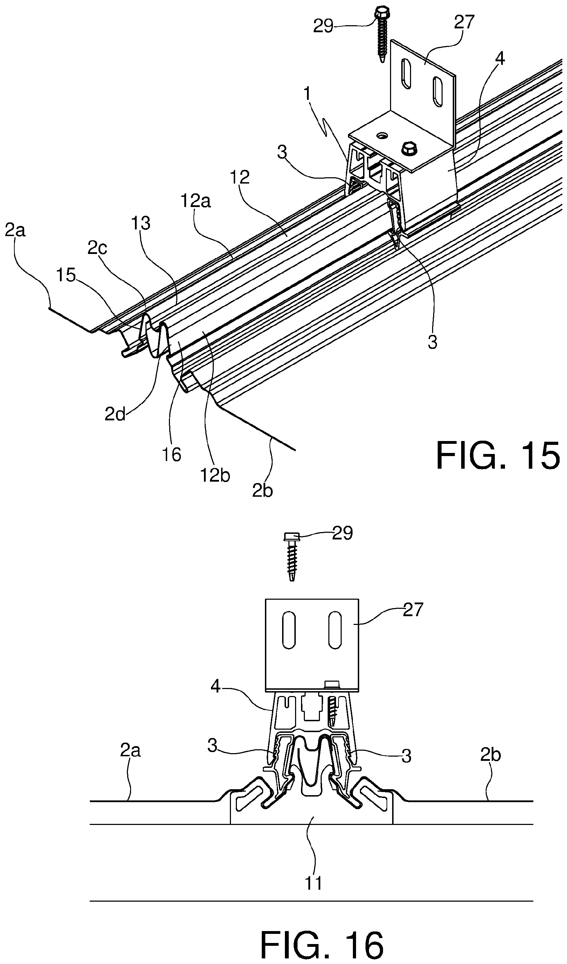

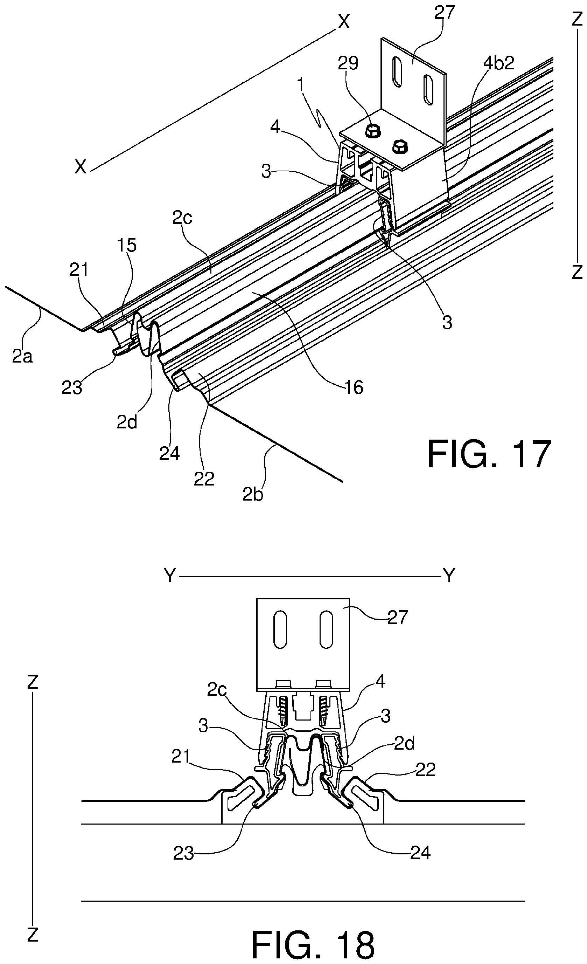

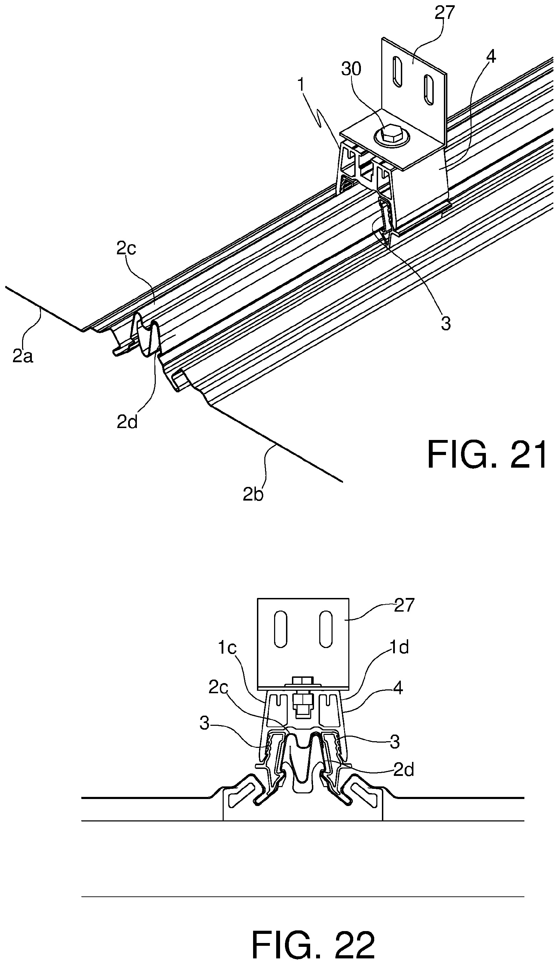

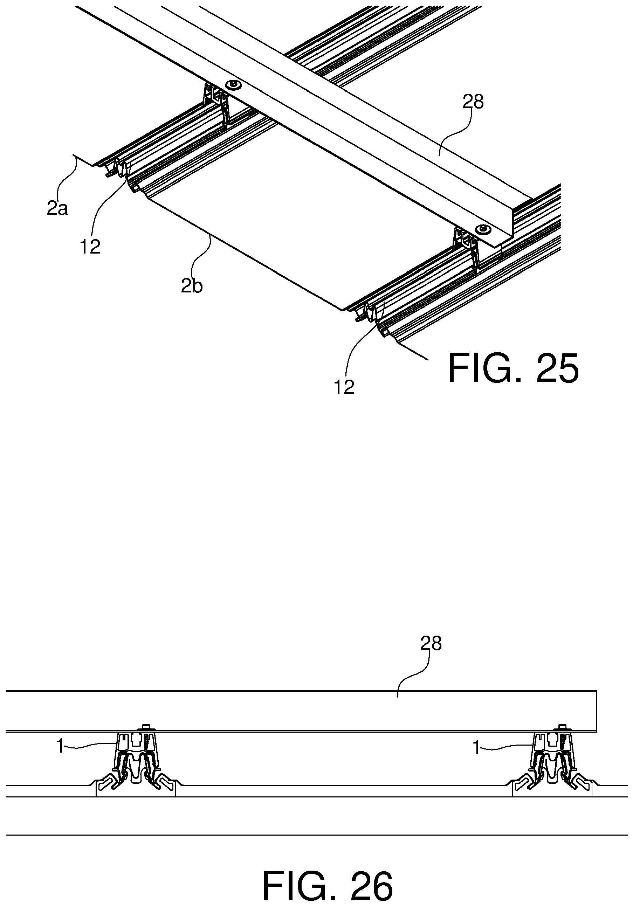

An assembly according to the present invention may comprise at least one accessory fastened or fastenable by the tightening and fastening component 4, the accessory potentially comprising for example at least one plate 27, 28 if desired L or U-shaped. Regarding this, see figures 15 to 26.

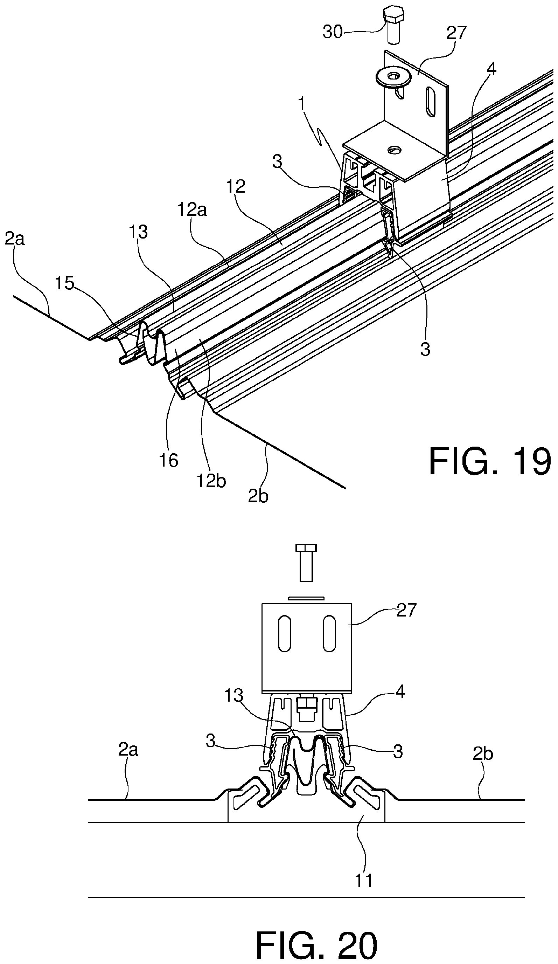

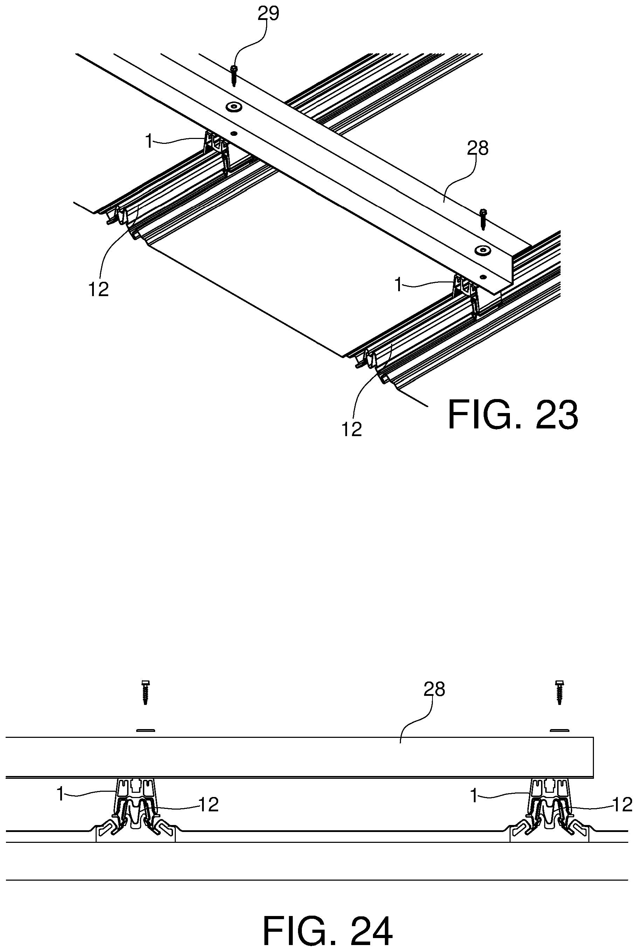

The plate 27, 28 could have length or width approximately equivalent to an assembly 1, or extend over a greater dimension, the plate 27, 28 - in this case - could even be fastened to several assemblies 1, for example fastened at the same rib 12 (see figures 19-22) or different ribs (see figures 23-26) and, for example, parallel.

Furthermore, the assembly could comprise at least one second bolt or screw or grub screw 29, 30 that can be fitted into the plate 27, 28 and into the tightening and fastening component 4 or, if provided, into the longitudinal seat LS or into the tubular segments 4a3, 4a4 thereof, so as to fasten and lock the accessory to the tightening and fastening component 4.

It should be borne in mind that such accessory could for example include a solar panel, a snow guard, a life-line, a gangway, a faraday cage, a light strip. Regarding this, the plate 27, 28 could be a component of such accessory or that could be fastened or fixed thereto.

As it will be observed, an assembly and a unit according to the present invention can be assembled in a quick and easy manner, by fitting or snap-fitting respective components.

Furthermore, an assembly and a unit like the one described above can also be disassembled from a panel or from the superimposed ends of two adjacent panels, without ruining neither the assembly nor the panels.

Furthermore, as it will be clearer, thanks to an assembly and a unit according to the present invention, a fastening of an accessory to one or more panels can be obtained without requiring the use of screws or bolts engaged in the panels or better in the through holes obtained in the latter, a solution that would clearly limit the resistance of the panels.

Thanks to the tightening at the raised zones 3f which are at the top 1a of the assembly 1 and not at the bottom 1b thereof, it is also possible not to hinder the possible sliding of the unit 1 and the rib 12 by means of thermal dilation on an underlying bracket, even should the assembly 1 be mounted at or immediately above a bracket. This is not possible in conventional solutions instead.

In addition, should a grub screw or screw or bolt 25 be present, then it would be possible to increase the loads that can be borne by the assemblies and the resistance thereof.

Furthermore, this solution would allow hindering the sliding of the assembly 1 on a surface, this being extremely advantageous in particular should the surface to be clad be inclined, such as an inclined roof.

Modifications and variants of the invention can be implemented within the scope of protection defined by the claims.

## Claims

1. Assembly for connecting or fastening accessories to building cladding panels or slabs comprising:
- at least two separated gripping and coupling components (3), said at least two gripping and coupling components (3) having an inner, in use, face (3a) arranged to abut against a respective end of a panel (2a, 2b) or of superimposed ends (2c, 2d) of two adjacent panels or slabs (2a, 2b) and an outer, in use face (3b);
- at least one tightening and fastening component (4) arranged to engage respective engagement portions (3c) of said at least two gripping and coupling components (3), so as to tighten them towards each other and close to the respective portions of a panel (2a, 2b) or of superimposed ends (2c, 2d) of two adjacent panels (2a, 2b), said engagement portions (3c) being delimited on said outer face (3b) or in a zone between said outer face (3b) and said inner face (3a);
- said tightening and fastening component (4) having at least one part arranged to allow the fastening of an accessory, wherein said at least one tightening and fastening component (4) comprises an intermediate body (4a) as well as at least two fins (4b, 4c) each extending starting from a respective portion or end of said intermediate body (4a), so as to define between them a housing zone (HZ) for said at least two gripping and coupling components (3) close to a panel (2a, 2b) or to superimposed ends (2c, 2d) of two adjacent panels (2a, 2b), each fin (4b1, 4b2) having means (4c) for engaging the engagement portions (3c) of a gripping and coupling component (3), wherein said engagement means (4c) are arranged to engage said engagement portions (3c) by snapping.

2. Assembly according to claim 1, wherein said engagement means (4c) are arranged to engage said engagement portions (3c) so as to pull said at least two gripping and coupling components (3) towards said intermediate body (4a).

3. Assembly according to claim 1 or 2, wherein said engagement means comprise first teeth (4c), while said engagement portions comprise second teeth (3c).

4. Assembly for connecting or fastening accessories to building cladding panels or slabs comprising:
- at least two separated gripping and coupling components (3), said at least two gripping and coupling components (3) having an inner, in use, face (3a) arranged to abut against a respective end of a panel (2a, 2b) or of superimposed ends (2c, 2d) of two adjacent panels or slabs (2a, 2b) and an outer, in use face (3b);
- at least one tightening and fastening component (4) arranged to engage respective engagement portions (3c) of said at least two gripping and coupling components (3), so as to tighten them towards each other and close to the respective portions of a panel (2a, 2b) or of superimposed ends (2c, 2d) of two adjacent panels (2a, 2b), said engagement portions (3c) being delimited on said outer face (3b) or in a zone between said outer face (3b) and said inner face (3a);
- said tightening and fastening component (4) having at least one part arranged to allow the fastening of an accessory, wherein said at least one tightening and fastening component (4) comprises an intermediate body (4a) as well as at least two fins (4b, 4c) each extending starting from a respective portion or end of said intermediate body (4a), so as to define between them a housing zone (HZ) for said at least two gripping and coupling components (3) close to a panel (2a, 2b) or to superimposed ends (2c, 2d) of two adjacent panels (2a, 2b), each fin (4b 1, 4b2) having means (4c) for engaging the engagement portions (3c) of a gripping and coupling component (3), wherein said at least one tightening and fastening component (4) comprise at least two parts (40a-40b) that can be approached or moved apart from each other between a moved-apart inoperative position and at least one approached or abutted tightening position of said at least two gripping and coupling components (3) one towards the other and close to the respective portions of a panel (2a, 2b) or of superimposed ends (2c, 2d) of two adjacent panels (2a, 2b), said assembly further comprises at least one locking component in approached position of said at least two parts (40a, 40b) or at least one component (41, 42) for the controlled approaching of said at least two parts, and wherein each part (40a, 40b) of said at least one tightening and fastening component (4) comprises a fin (4b1, 4b2) and half or a portion of the intermediate body (4a), each fin (4b 1, 4b2) wrapping and pushing the outer face (3b) of a respective gripping and coupling component (3).

5. Assembly according to any one of the preceding claims, wherein the inner face (3a) of said at least two gripping and coupling components (3) comprises at least one protuberance (3d) arranged to engage and push against a groove defined by a panel (2a , 2b) or by superimposed ends (2c, 2d) of two adjacent panels (2a, 2b) or a groove for engaging with a projecting zone of a panel (2a, 2b) or superimposed ends (2c, 2d) of two adjacent panels (2a, 2b).

6. Assembly according to claim 5 when dependent on claim 1, wherein said protuberance (3d) or said groove of a first gripping and coupling component (3) extends in a direction towards a second gripping and coupling component (3) opposite to the first and towards the intermediate body (4a) of said tightening and fastening component (4).

7. Assembly according to claim 6, wherein the inner face (3a) of said at least two gripping and coupling components (3) comprises, on one side, in use, distal from said intermediate body (4a) to a side, in use, proximal to said intermediate body (4a), said protuberance (3d) or said groove, then a recessed zone (3e) and a raised zone (3f) or zone offset with respect to said recessed zone (3e) so that the distance between the raised zones (3f) of said at least two gripping and coupling components (3) is less than the distance between the recessed zones (3e) of such gripping and coupling components (3).

8. Assembly according to any one of the preceding claims when dependent on claim 1, wherein said intermediate body (4a) includes at least one longitudinal seat (LS) open in the direction opposite to said housing zone (HZ).

9. Assembly according to claim 8, wherein said intermediate body (4a) comprises two tubular or block-like segments (4a3, 4a4) defining between them said longitudinal seat (LS), said tubular or block-like segments (4a3, 4a4) being bridge-connected by means of a bottom wall (4d) defining, together with said fins (4b1, 4b2), said housing zone (HZ).

10. Assembly according to claim 8 or 9, comprising at least one first grub screw or screw or bolt (25) insertable into said longitudinal seat (LS) and in a through hole (1) formed in said bottom wall (4d), said at least one grub screw or screw or bolt (25) being arranged to deform said panel or adjacent panels (2a, 2b) so as to increase the tightening action of said at least two gripping and coupling components (3) against each other and close to respective portions of a panel (2a, 2b) or of superimposed ends (2c, 2d) of two adjacent panels (2a, 2b).

11. Assembly according to any one of the preceding claims, comprising at least one accessory that is fastened or can be fastened by said at least one tightening and fastening component (4), said accessory comprising at least one plate (27, 28).

12. Assembly according to claim 8 and 11 or 9 and 11 or 10 and 11, comprising at least one second bolt or screw or grub screw (29, 30) that can be fitted into said plate (27, 28) and into said longitudinal seat (LS) or into said tubular or block segments (4a3, 4a4) so as to fasten and lock said accessory to said at least one tightening and fastening component (4).

13. Building lining unit comprising at least one panel or two adjacent panels (2a, 2b) and at least connecting or fastening assembly according to any one of claims 1 to 12, wherein at least two gripping and coupling components (3) are tightened by said at least one tightening and fastening component (4) close to respective portions of a panel (2a, 2b) or superimposed end (2c, 2d) of two adjacent panels (2a, 2b).

14. Unit according to claim 13, wherein the coupled or superimposed ends or lateral edges (2c, 2d) of adjacent panels (2a, 2b) define at least one rib or ridge (12) with extension longitudinal or parallel to the front (1e)-rear (1f) direction of said at least one assembly (1), wherein considering the longitudinal extension direction of said coupled or superimposed lateral edges (2c, 2d) of two panels (2a, 2b) as the first direction (x-x), the direction from one side to the other of said at least one rib (12) as the second direction (y-y) orthogonal to the first direction (x-x), and the direction orthogonal to the first (x-x) and the second (y-y) direction as the third direction (z-z), said at least one rib (12) has a cross section taken along a plane orthogonal to the first direction (x-x) and wherein the second (y-y) and the third (z-z) direction lie, constant along the longitudinal extension of the panels (2a , 2b) or along the first direction (x-x), and
wherein at least one assembly (1) is mounted on said at least one rib or ridge (12), with at least two gripping and coupling components (3) arranged one opposite to the other with respect to the rib or ridge (12) and at least one tightening and fastening component (4) mounted as a plug or cap on said gripping and coupling components (3) so as to tighten them against said at least one rib or ridge (12).

15. Method for mounting an assembly on a rib or ridge (12) defined by a panel or slab (2a, 2b) or by lateral ends or edges (2c, 2d) coupled or superimposed of adjacent panels,
said assembly comprising:
- at least two separated gripping and coupling components (3), said at least two gripping and coupling components (3) having an inner, in use, face (3a) arranged to abut against a respective end of a panel (2a, 2b) or of superimposed ends (2c, 2d) of two adjacent panels or slabs (2a, 2b) and an outer, in use face (3b);
- at least one tightening and fastening component (4) arranged to engage respective engagement portions (3c) of said at least two gripping and coupling components (3), so as to tighten them towards each other and close to the respective portions of a panel (2a, 2b) or of superimposed ends (2c, 2d) of two adjacent panels (2a, 2b), said engagement portions (3c) being delimited on said outer face (3b) or in a zone between said outer face (3b) and said inner face (3a);
- said tightening and fastening component (4) having at least one part arranged to allow the fastening of an accessory, wherein said at least one tightening and fastening component (4) comprises an intermediate body (4a) as well as at least two fins (4b, 4c) each extending starting from a respective portion or end of said intermediate body (4a), so as to define between them a housing zone (HZ) for said at least two gripping and coupling components (3) close to a panel (2a, 2b) or to superimposed ends (2c, 2d) of two adjacent panels (2a, 2b), each fin (4b 1, 4b2) having means (4c) for engaging the engagement portions (3c) of a gripping and coupling component (3),
said method comprising the following steps:
- arranging at least one gripping and coupling component (3) resting against a respective side of the rib (12), so that the inner face (3a) of at least one gripping and coupling component (3) rests against a first side (12a) of the rib (12) and the inner face (3a) of at least another gripping and coupling component (3) rests against a second side (12a) of the rib (12), and subsequently
- carrying the tightening and fastening component (4) with the respective housing zone (HZ) facing towards the gripping and coupling components (3) and thus fitting the tightening and fastening component (4) around the gripping and coupling components (3), so as to determine the engagement of the engagement portions (3c) and the engagement means (4c), or
- placing parts (40a, 40b) of the tightening and fastening component (4) wrapping or around the gripping and coupling components (3), and then using or inserting a locking component or a controlled approaching component (41, 42) for tightening the parts (40a, 40b) of the tightening and fastening component (4) close to the gripping and coupling components (3) so as to press them against the sides of the rib (12).

## Patentansprüche

1. Baugruppe zum Verbinden oder Befestigen von Zubehörteilen an Gebäudeverkleidungsplatten oder - tafeln, umfassend:
- mindestens zwei getrennte Greif- und Kopplungskomponenten (3), wobei die besagten mindestens zwei Greif- und Kopplungskomponenten (3) eine bei Verwendung innere Fläche (3a), die so angeordnet ist, dass sie an einem jeweiligen Ende eine Platte (2a, 2b) oder übereinanderliegender Enden (2c, 2d) zweier benachbarter Platten oder Tafeln (2a, 2b) anliegt, und eine bei Verwendung äußere Fläche (3b) aufweisen;
- mindestens eine Spann- und Befestigungskomponente (4), die so angeordnet ist, dass sie in jeweilige Eingriffsabschnitte (3c) der besagten mindestens zwei Greif- und Kopplungskomponenten (3) eingreift, um sie zueinander hin und nahe jeweiliger Abschnitte eine Platte (2a, 2b) oder übereinanderliegender Enden (2c, 2d) zweier benachbarter Platten (2a, 2b) zu spannen, wobei die besagten Eingriffsabschnitte (3c) auf der besagten äußeren Fläche (3b) oder in einem Bereich zwischen der besagten äußeren Fläche (3b) und der besagten inneren Fläche (3a) begrenzt sind;
- wobei die besagte Spann- und Befestigungskomponente (4) mindestens einen Teil aufweist, der so angeordnet ist, dass er das Befestigen eines Zubehörteils ermöglicht, worin die besagte mindestens eine Spann-und Befestigungskomponente (4) einen Zwischenkörper (4a) sowie mindestens zwei Flossen (4b, 4c), die sich jeweils von einem jeweiligen Abschnitt oder Ende des besagten Zwischenkörpers (4a) aus erstrecken, umfasst, um zwischen ihnen einen Aufnahmebereich (HZ) für die besagten mindestens zwei Greif- und Kopplungskomponenten (3) nahe eine Platte (2a,2b) oder übereinanderliegender Enden (2c, 2d) zweier benachbarter Platten (2a, 2b) zu definieren, wobei jede Flosse (4b1, 4b2) Mittel (4c) zum Eingreifen in die Eingriffsabschnitte (3c) einer Greif- und Kopplungskomponente (3) aufweist, worin die besagten Eingriffsmittel (4c) so angeordnet sind, dass sie in die besagten Eingriffsabschnitte (3c) durch Einschnappen eingreifen.

2. Baugruppe nach Anspruch 1, worin die besagten Eingriffsmittel (4c) so angeordnet sind, dass sie in die besagten Eingriffsabschnitte (3c) eingreifen, um die besagten mindestens zwei Greif- und Kopplungskomponenten (3) zu dem besagten Zwischenkörper (4a) hin zu ziehen.

3. Baugruppe nach Anspruch 1 oder 2, worin die besagten Eingriffsmittel erste Zähne (4c) umfassen, während die besagten Eingriffsabschnitte zweite Zähne (3c) umfassen.

4. Baugruppe zum Verbinden oder Befestigen von Zubehörteilen an Gebäudeverkleidungsplatten oder -tafeln, umfassend:
- mindestens zwei getrennte Greif- und Kopplungskomponenten (3), wobei die besagten mindestens zwei Greif- und Kopplungskomponenten (3) eine bei Verwendung innere Fläche (3a), die so angeordnet ist, dass sie an einem jeweiligen Ende eine Platte (2a, 2b) oder übereinanderliegender Enden (2c, 2d) zweier benachbarter Platten oder Tafeln (2a, 2b) anliegt, und eine bei Verwendung äußere Fläche (3b) aufweisen;
- mindestens eine Spann- und Befestigungskomponente (4), die so angeordnet ist, dass sie in jeweilige Eingriffsabschnitte (3c) der besagten mindestens zwei Greif- und Kopplungskomponenten (3) eingreift, um sie zueinander hin und nahe jeweiliger Abschnitte eine Platte (2a, 2b) oder übereinanderliegender Enden (2c, 2d) zweier benachbarter Platten (2a, 2b) zu spannen, wobei die besagten Eingriffsabschnitte (3c) auf der besagten äußeren Fläche (3b) oder in einem Bereich zwischen der besagten äußeren Fläche (3b) und der besagten inneren Fläche (3a) begrenzt sind;
- wobei die besagte Spann- und Befestigungskomponente (4) mindestens einen Teil aufweist, der so angeordnet ist, dass er das Befestigen eines Zubehörteils ermöglicht, worin die besagte mindestens eine Spannund Befestigungskomponente (4) einen Zwischenkörper (4a) sowie mindestens zwei Flossen (4b, 4c), die sich jeweils von einem jeweiligen Abschnitt oder Ende des besagten Zwischenkörpers (4a) aus erstrecken, umfasst, um zwischen ihnen einen Aufnahmebereich (HZ) für die besagten mindestens zwei Greif- und Kopplungskomponenten (3) nahe eine Platte (2a, 2b) oder übereinanderliegender Enden (2c, 2d) zweier benachbarter Platten (2a, 2b) zu definieren, wobei jede Flosse (4b1, 4b2) Mittel (4c) zum Eingreifen in die Eingriffsabschnitte (3c) einer Greif- und Kopplungskomponente (3) aufweist, worin die besagte mindestens eine Spann- und Befestigungskomponente (4) mindestens zwei Teile (40a-40b) umfasst, die einander angenähert oder voneinander wegbewegt werden können zwischen einer auseinanderbewegten unwirksamen Position und mindestens einer angenäherten oder anliegenden Spannposition der besagten mindestens zwei Greif- und Kopplungskomponenten (3) zueinander hin und nahe der jeweiligen Abschnitte eine Platte (2a, 2b) oder übereinanderliegenden Enden (2c, 2d) zweier benachbarter Platten (2a, 2b), wobei die besagte Baugruppe ferner mindestens eine Verriegelungskomponente in angenäherter Position der besagten mindestens zwei Teile (40a, 40b) oder mindestens eine Komponente (41, 42) für die kontrollierte Annäherung der besagten mindestens zwei Teile umfasst, und worin jedes Teil (40a, 40b) der besagten mindestens einen Spann- und Befestigungskomponente (4) eine Flosse (4b1, 4b2) und die Hälfte oder einen Abschnitt des Zwischenkörpers (4a) umfasst, wobei jede Flosse (4b1, 4b2) die äußere Fläche (3b) einer jeweiligen Greif- und Kopplungskomponente (3) umhüllt und drückt.

5. Baugruppe nach irgendeinem der vorangegangenen Ansprüche, worin die innere Fläche (3a) der besagten mindestens zwei Greif- und Kopplungskomponenten (3) mindestens einen Vorsprung (3d), der angeordnet ist, um in eine Nut, die durch eine Platte (2a, 2b) oder durch übereinanderliegende Enden (2c, 2d) zweier benachbarter Platten (2a, 2b) definiert ist, einzugreifen und dagegen zu drücken oder eine Nut zum Eingreifen in einen vorstehenden Bereich eine Platte (2a, 2b) oder übereinanderliegender Enden (2c, 2d) zweier benachbarter Platten (2a, 2b) umfasst.

6. Baugruppe nach Anspruch 5, wenn abhängig von Anspruch 1, worin sich der besagte Vorsprung (3d) oder die besagte Nut einer ersten Greif- und Kopplungskomponente (3) in eine Richtung zu einer zweiten Greif- und Kopplungskomponente (3), die der ersten gegenüberliegt, und zu dem Zwischenkörper (4a) der besagten Spann- und Befestigungskomponente (4) hin erstreckt.

7. Baugruppe nach Anspruch 6, worin die innere Fläche (3a) der besagten mindestens zwei Greif- und Kopplungskomponenten (3) auf einer Seite, bei Verwendung distal von dem Zwischenkörper (4a), zu einer Seite, bei Verwendung proximal zu dem besagten Zwischenkörper (4a), den besagten Vorsprung (3d) oder die besagte Nut, dann einen vertieften Bereich (3e) und einen erhabenen Bereich (3f) oder einen Bereich, der in Bezug auf den besagten vertieften Bereich (3e) versetzt ist, umfasst, sodass der Abstand zwischen den erhabenen Bereichen (3f) der besagten mindestens zwei Greif- und Kopplungskomponenten (3) geringer ist als der Abstand zwischen den vertieften Bereichen (3e) solcher Greifund Kopplungskomponenten (3).

8. Baugruppe nach irgendeinem der vorangegangenen Ansprüche, wenn abhängig von Anspruch 1, worin der besagte Zwischenkörper (4a) mindestens einen Längssitz (LS) beinhaltet, der in die dem besagten Aufnahmebereich (HZ) entgegengesetzte Richtung offen ist.

9. Baugruppe nach Anspruch 8, worin der besagte Zwischenkörper (4a) zwei röhrenförmige oder blockartige Segmente (4a3, 4a4) umfasst, die untereinander den besagten Längssitz (LS) definieren, wobei die besagten röhrenförmigen oder blockartigen Segmente (4a3, 4a4) mittels einer Bodenwand (4d), die zusammen mit den besagten Flossen (4b1, 4b2) den besagten Aufnahmebereich (HZ) definiert, eine Brückenverbindung sind.

10. Baugruppe nach Anspruch 8 oder 9, umfassend mindestens eine erste Madenschraube oder Schraube oder einen ersten Bolzen (25), die/der in den besagten Längssitz (LS) und in ein Durchgangsloch (1), das in der besagten Bodenwand (4d) ausgebildet ist, eingesetzt werden kann, wobei die besagte mindestens eine Madenschraube oder Schraube oder der besagte mindestens eine Bolzen (25) angeordnet ist, um das besagte Platte oder die benachbarten Platten (2a, 2b) zu verformen, um die Spannaktion der besagten mindestens zwei Greif- und Kopplungskomponenten (3) gegeneinander und nahe jeweiliger Abschnitte eine Platte (2a, 2b) oder übereinanderliegender Enden (2c, 2d) zweier benachbarter Platten (2a, 2b) zu erhöhen.

11. Baugruppe nach irgendeinem der vorangegangenen Ansprüche, umfassend mindestens einem Zubehörteil, das durch die besagte mindestens eine Spann- und Befestigungskomponente (4) befestigt ist oder befestigt werden kann, wobei das Zubehörteil mindestens eine Platte (27, 28) umfasst.

12. Baugruppe nach Anspruch 8 und 11 oder 9 und 11 oder 10 und 11, umfassend mindestens einen zweiten Bolzen oder eine zweite Schraube oder Madenschraube (29, 30), der/die in die besagte Platte (27, 28) und in den besagten Längssitz (LS) oder in die besagten röhrenförmigen oder blockartigen Segmente (4a3, 4a4) eingesetzt werden kann, um das besagte Zubehörteil an der besagten mindestens einen Spann- und Befestigungskomponente (4) zu befestigen und zu verriegeln.

13. Gebäudeverkleidungseinheit, umfassend mindestens eine Platte oder zwei benachbarten Platten (2a, 2b) und mindestens eine Verbindungs- oder Befestigungsbaugruppe nach irgendeinem der Ansprüche 1 bis 12, worin mindestens zwei Greif- und Kopplungskomponenten (3) durch die besagte mindestens eine Spann- und Befestigungskomponente (4) nahe jeweiliger Abschnitte eine Platte (2a, 2b) oder übereinanderliegenden Endes (2c, 2d) zweier benachbarter Platten (2a, 2b) gespannt werden.

14. Einheit nach Anspruch 13, worin die gekoppelten oder übereinanderliegenden Enden oder Seitenkanten (2c, 2d) benachbarter Platten (2a, 2b) mindestens eine Rippe oder Leiste (12) mit Längserstreckung oder parallel zur Vorne-(le)-Hinten-(lf)-Richtung der besagten mindestens einen Baugruppe (1) definieren, worin, unter Berücksichtigung der Längserstreckungsrichtung der besagten gekoppelten oder übereinanderliegenden Seitenkanten (2c, 2d) zweier Platten (2a, 2b) als die erste Richtung (x-x), die Richtung von einer Seite zur anderen der besagten mindestens einen Rippe (12) als die zweite Richtung (y-y) orthogonal zur ersten Richtung (x-x) und die Richtung orthogonal zur ersten (x-x) und zweiten (y-y) Richtung als die dritte Richtung (z-z), die besagte mindestens eine Rippe (12) einen Querschnitt entlang einer Ebene orthogonal zur ersten Richtung (x-x) aufweist und worin die zweite (y-y) und die dritte (z-z) Richtung konstant entlang der Längserstreckung der Platten (2a, 2b) oder entlang der ersten Richtung (x-x) liegen, und
worin mindestens eine Baugruppe (1) auf der besagten mindestens eine Rippe oder Leiste (12) montiert ist, mit mindestens zwei Greif- und Kopplungskomponenten (3), die einander gegenüberliegend in Bezug auf die Rippe oder Leiste (12) angeordnet sind, und mindestens einer Spann- und Befestigungskomponente (4), das als Stopfen oder Kappe auf den besagten Greif- und Kopplungskomponenten (3) montiert ist, um sie gegen die besagte mindestens eine Rippe oder Leiste (12) zu spannen.

15. Verfahren zum Montieren einer Baugruppe auf einer Rippe oder Leiste (12), die durch eine Platte oder eine Tafel (2a, 2b) oder durch seitliche Enden oder Kanten (2c, 2d), die durch benachbarte Platten gekuppelt oder übereinanderliegend sind, definiert ist,
die besagte Baugruppe umfassend:
- mindestens zwei getrennte Greif- und Kopplungskomponenten (3), wobei die besagten mindestens zwei Greif- und Kopplungskomponenten (3) eine bei Verwendung innere Fläche (3a), die so angeordnet ist, dass sie an einem jeweiligen Ende eine Platte (2a, 2b) oder übereinanderliegender Enden (2c, 2d) zweier benachbarter Platten oder Tafeln (2a, 2b) anliegt, und eine bei Verwendung äußere Fläche (3b) aufweisen;
- mindestens eine Spann- und Befestigungskomponente (4), die so angeordnet ist, dass sie in jeweilige Eingriffsabschnitte (3c) der besagten mindestens zwei Greif- und Kopplungskomponenten (3) eingreift, um sie zueinander hin und nahe jeweiliger Abschnitte eine Platte (2a, 2b) oder übereinanderliegender Enden (2c, 2d) zweier benachbarter Platten (2a, 2b) zu spannen, wobei die besagten Eingriffsabschnitte (3c) auf der besagten äußeren Fläche (3b) oder in einem Bereich zwischen der besagten äußeren Fläche (3b) und der besagten inneren Fläche (3a) begrenzt sind;
- wobei die besagte Spann- und Befestigungskomponente (4) mindestens einen Teil aufweist, der so angeordnet ist, dass er das Befestigen eines Zubehörteils ermöglicht, worin die besagte mindestens eine Spannund Befestigungskomponente (4) einen Zwischenkörper (4a) sowie mindestens zwei Flossen (4b, 4c), die sich jeweils von einem jeweiligen Abschnitt oder Ende des besagten Zwischenkörpers (4a) aus erstrecken, umfasst, um zwischen ihnen einen Aufnahmebereich (HZ) für die besagten mindestens zwei Greif- und Kopplungskomponenten (3) nahe eine Platte (2a, 2b) oder übereinanderliegender Enden (2c, 2d) zweier benachbarter Platten (2a, 2b) zu definieren, wobei jede Flosse (4b1, 4b2) Mittel (4c) zum Eingreifen in die Eingriffsabschnitte (3c) einer Greif- und Kopplungskomponente (3) aufweist,
das besagte Verfahren umfassend die folgenden Schritte:
- des Anordnens mindestens einer Greif- und Kopplungskomponente (3), die an einer jeweiligen Seite der Rippe (12) anliegt, sodass die innere Fläche (3a) mindestens einer Greif- und Kopplungskomponente (3) an einer ersten Seite (12a) der Rippe (12) anliegt und die innere Fläche (3a) mindestens einer anderen Greif- und Kopplungskomponente (3) an einer zweiten Seite (12a) der Rippe (12) anliegt, und anschließend
- des Tragens des Spann- und Befestigungskomponente (4) mit dem jeweiligen Aufnahmebereich (HZ) zu den Kopplungskomponenten (3) hin gerichtet und somit des Einsetzens der Spann- und Befestigungskomponente (4) um die Greif- und Kopplungskomponenten (3) herum, um den Eingriff der Eingriffsabschnitte (3c) und der Eingriffsmittel (4c) zu bestimmen, oder
- des Platzierens von Teilen (40a, 40b) der Spann- und Befestigungskomponente (4), die die Greif- und Kopplungskomponenten (3) umhüllen oder umschließen, und dann des Verwendens oder Einsetzens einer Verriegelungskomponente oder einer kontrollierten Annäherungskomponente (41, 42) zum Spannen der Teile (40a, 40b) der Spann- und Befestigungskomponente (4) nahe der Greif- und Kopplungskomponenten (3), um sie gegen die Seiten der Rippe (12) zu drücken.

## Revendications

1. Ensemble pour raccorder ou fixer des accessoires à des panneaux ou des dalles de parement pour la construction, comprenant :
- au moins deux composants de préhension et de couplage (3) séparés, lesdits au moins deux composants de préhension et de couplage (3) ayant une face intérieure (3a), pendant l'utilisation, agencée pour entrer en butée contre une extrémité respective d'un panneau (2a, 2b) ou d'extrémités superposées (2c, 2d) de deux panneaux ou dalles adjacents (2a, 2b) et une face extérieure (3b), pendant l'utilisation ;
- au moins un composant de serrage et de fixation (4) agencé pour accoupler les parties d'accouplement (3c) respectives desdits au moins deux composants de préhension et de couplage (3), de manière à les serrer l'un vers l'autre et près des parties respectives d'un panneau (2a, 2b) ou d'extrémités superposées (2c, 2d) de deux panneaux adjacents (2a, 2b), lesdites parties d'accouplement (3c) étant délimitées sur ladite face extérieure (3b) ou dans une zone entre ladite face extérieure (3b) et ladite face intérieure (3a) ;
- ledit composant de serrage et de fixation (4) ayant au moins une partie agencée pour permettre la fixation d'un accessoire, dans lequel ledit au moins un composant de serrage et de fixation (4) comprend un corps intermédiaire (4a) ainsi qu'au moins deux ailettes (4b, 4c), chacune s'étendant à partir d'une partie ou extrémité respective dudit corps intermédiaire (4a), de façon à définir entre elles une zone de logement (HZ) pour lesdits au moins deux composants de préhension et de couplage (3) près d'un panneau (2a, 2b) ou d'extrémités superposées (2c, 2d) de deux panneaux adjacents (2a, 2b), chaque ailette (4b1, 4b2) ayant des moyens (4c) pour accoupler les parties d'accouplement (3c) d'un composant de préhension et de couplage (3), dans lequel lesdits moyens d'accouplement (4c) sont agencés pour accoupler lesdites parties d'accouplement (3c) par clipsage.

2. Ensemble selon la revendication 1, dans lequel lesdits moyens d'accouplement (4c) sont agencés pour accoupler lesdites parties d'accouplement (3c) de façon à tirer lesdits au moins deux composants de préhension et de couplage (3) vers ledit corps intermédiaire (4a).

3. Ensemble selon la revendication 1 ou 2, dans lequel lesdits moyens d'accouplement comprennent des premières dents (4c), alors que lesdites parties d'accouplement comprennent des deuxièmes dents (3c).

4. Ensemble pour raccorder ou fixer des accessoires à des panneaux ou des dalles de parement pour la construction, comprenant :
- au moins deux composants de préhension et de couplage (3) séparés, lesdits au moins deux composants de préhension et de couplage (3) ayant une face intérieure (3a), pendant l'utilisation, agencée pour entrer en butée contre une extrémité respective d'un panneau (2a, 2b) ou d'extrémités superposées (2c, 2d) de deux panneaux ou dalles adjacents (2a, 2b) et une face extérieure (3b), pendant l'utilisation ;
- au moins un composant de serrage et de fixation (4) agencé pour accoupler les parties d'accouplement (3c) respectives desdits au moins deux composants de préhension et de couplage (3), de manière à les serrer l'un vers l'autre et près des parties respectives d'un panneau (2a, 2b) ou d'extrémités superposées (2c, 2d) de deux panneaux adjacents (2a, 2b), lesdites parties d'accouplement (3c) étant délimitées sur ladite face extérieure (3b) ou dans une zone entre ladite face extérieure (3b) et ladite face intérieure (3a) ;
- ledit composant de serrage et de fixation (4) ayant au moins une partie agencée pour permettre la fixation d'un accessoire, dans lequel ledit au moins un composant de serrage et de fixation (4) comprend un corps intermédiaire (4a) ainsi qu'au moins deux ailettes (4b, 4c), chacune s'étendant à partir d'une partie ou extrémité respective dudit corps intermédiaire (4a), de façon à définir entre elles une zone de logement (HZ) pour lesdits au moins deux composants de préhension et de couplage (3) près d'un panneau (2a, 2b) ou des extrémités superposées (2c, 2d) de deux panneaux adjacents (2a, 2b), chaque ailette (4b1, 4b2) ayant des moyens (4c) pour accoupler les parties d'accouplement (3c) d'un composant de préhension et de couplage (3), dans lequel ledit au moins un composant de serrage et de fixation (4) comprend au moins deux parties (40a-40b) qui peuvent être rapprochées ou éloignées l'une de l'autre entre une position inopérante séparée et au moins une position de serrage rapprochée ou en butée desdits au moins deux composants de préhension et de couplage (3) l'un vers l'autre et proches des parties respectives d'un panneau (2a, 2b) ou des extrémités superposées (2c, 2d) de deux panneaux adjacents (2a, 2b), ledit ensemble comprenant en outre au moins un composant de verrouillage dans la position rapprochée desdites au moins deux parties (40a, 40b) ou au moins un composant (41, 42) pour le rapprochement contrôlé desdites au moins deux parties, et dans lequel chaque partie (40a, 40b) dudit au moins un composant de serrage et de fixation (4) comprend une ailette (4b1, 4b2) et la moitié ou une partie du corps intermédiaire (4a), chaque ailette (4b1, 4b2) enveloppant et poussant la face extérieure (3b) d'un composant de préhension et de couplage (3) respectif.

5. Ensemble selon l'une quelconque des revendications précédentes, dans lequel la face intérieure (3a) desdits au moins deux composants de préhension et de couplage (3) comprend au moins une protubérance (3d) agencée pour s'accoupler et pousser contre une rainure définie par un panneau (2a, 2b) ou par les extrémités superposées (2c, 2d) de deux panneaux adjacents (2a, 2b) ou une rainure pour s'accoupler avec une zone saillante d'un panneau (2a, 2b) ou des extrémités superposées (2c, 2d) de deux panneaux adjacents (2a, 2b) .

6. Ensemble selon la revendication 5 quand elle dépend de la revendication 1, dans lequel ladite protubérance (3d) ou ladite rainure d'un premier composant de préhension et de couplage (3) s'étend dans une direction vers un deuxième composant de préhension et de couplage (3) opposé au premier et vers le corps intermédiaire (4a) dudit composant de serrage et de fixation (4).

7. Ensemble selon la revendication 6, dans lequel la face intérieure (3a) desdits au moins deux composants de préhension et de couplage (3) comprend, d'un côté, pendant l'utilisation, distale dudit corps intermédiaire (4a) sur un côté, pendant l'utilisation, proximale dudit corps intermédiaire (4a), ladite protubérance (3d) ou ladite rainure, puis une zone encastrée (3e) et une zone relevée (3f) ou une zone décalée par rapport à ladite zone encastrée (3e), de telle sorte que la distance entre les zones relevées (3f) desdits au moins deux composants de préhension et de couplage (3) soit inférieure à la distance entre les zones encastrées (3e) de ces composants de préhension et de couplage (3).

8. Ensemble selon l'une quelconque des revendications précédentes quand elle dépend de la revendication 1, dans lequel ledit corps intermédiaire (4a) comprend au moins un siège longitudinal (LS) ouvert dans la direction opposée à ladite zone de logement (HZ).

9. Ensemble selon la revendication 8, dans lequel ledit corps intermédiaire (4a) comprend deux segments en forme de tube ou de bloc (4a3, 4a4) définissant entre eux ledit siège longitudinal (LS), lesdits segments en forme de tube ou de bloc (4a3, 4a4) étant pontés au moyen d'une paroi inférieure (4d) définissant, avec lesdites ailettes (4b 1, 4b2), ladite zone de logement (HZ) .

10. Ensemble selon la revendication 8 ou 9, comprenant au moins une première vis sans tête ou vis ou un premier boulon (25) insérables dans ledit siège longitudinal (LS) et dans un trou traversant (1) formés dans ladite paroi inférieure (4d), lesdits au moins une vis sans tête ou vis ou boulon (25) étant agencés pour déformer lesdits panneau ou panneaux adjacents (2a, 2b) de façon à augmenter l'action de serrage desdits au moins deux composants de préhension et de couplage (3) l'un contre l'autre et proches des parties d'un panneau (2a, 2b) respectives ou des extrémités superposées (2c, 2d) de deux panneaux adjacents (2a, 2b).

11. Ensemble selon l'une quelconque des revendications précédentes, comprenant au moins un accessoire qui est fixé ou pouvant être fixé par ledit au moins un composant de serrage et de fixation (4), ledit accessoire comprenant au moins une plaque (27, 28).

12. Ensemble selon les revendications 8 et 11 ou 9 et 11 ou 10 et 11, comprenant au moins un deuxième boulon ou vis ou vis sans tête (29, 30) pouvant être installés dans ladite plaque (27, 28) et dans ledit siège longitudinal (LS) ou dans lesdits segments en forme de tube ou de bloc (4a3, 4a4) de façon à fixer et verrouiller ledit accessoire sur ledit au moins un composant de serrage et de fixation (4).

13. Unité de parement de construction comprenant au moins un panneau ou deux panneaux adjacents (2a, 2b) et au moins un ensemble de raccordement ou de fixation selon l'une quelconque des revendications 1 à 12, dans lequel au moins deux composants de préhension et de couplage (3) sont serrés par ledit au moins un composant de serrage et de fixation (4) près des parties d'un panneau (2a, 2b) respectives ou des extrémités superposées (2c, 2d) de deux panneaux adjacents (2a, 2b).

14. Unité selon la revendication 13, dans laquelle les extrémités couplées ou superposées ou les bords latéraux (2c, 2d) de panneaux adjacents (2a, 2b) définissent au moins une nervure ou arête (12) avec une extension longitudinale ou parallèle à la direction avant (le)-arrière (1f) dudit au moins un ensemble (1), dans lequel en considérant la direction d'extension longitudinale desdits bords latéraux couplés ou superposés (2c, 2d) de deux panneaux (2a, 2b) comme première direction (x-x), la direction d'un côté à l'autre de ladite au moins une nervure (12) comme la deuxième direction (y-y) orthogonale à la première direction (x-x), et la direction orthogonale à la première (x-x) et la deuxième (y-y) direction comme la troisième direction (z-z), ladite au moins une nervure (12) a une section transversale le long d'un plan orthogonal à la première direction (x-x) et dans laquelle la deuxième (y-y) et la troisième (z-z) direction reposent, constantes le long de l'extension longitudinale des panneaux (2a, 2b) ou le long de la première direction (x-x), et
dans laquelle au moins un ensemble (1) est monté sur ladite au moins une nervure ou arête (12), avec au moins deux composants de préhension et de couplage (3) agencés l'un opposé à l'autre par rapport à la nervure ou arête (12) et au moins un composant de serrage et de fixation (4) monté comme un bouchon ou un capuchon sur lesdits composants de préhension et de couplage (3) de façon à les serrer contre ladite au moins une nervure ou arête (12).

15. Procédé pour monter un ensemble sur une nervure ou arête (12) définies par un panneau ou une dalle (2a, 2b) ou par les extrémités ou les bords latéraux (2c, 2d) couplés ou superposés de panneaux adjacents,
ledit ensemble comprenant :
- au moins deux composants de préhension et de couplage (3) séparés, lesdits au moins deux composants de préhension et de couplage (3) ayant une face intérieure (3a), pendant l'utilisation, agencée pour entrer en butée contre une extrémité respective d'un panneau (2a, 2b) ou d'extrémités superposées (2c, 2d) de deux panneaux ou dalles adjacents (2a, 2b) et une face extérieure (3b), pendant l'utilisation ;
- au moins un composant de serrage et de fixation (4) agencé pour accoupler les parties d'accouplement (3c) respectives desdits au moins deux composants de préhension et de couplage (3), de manière à les serrer l'un vers l'autre et près des parties respectives d'un panneau (2a, 2b) ou d'extrémités superposées (2c, 2d) de deux panneaux adjacents (2a, 2b), lesdites parties d'accouplement (3c) étant délimitées sur ladite face extérieure (3b) ou dans une zone entre ladite face extérieure (3b) et ladite face intérieure (3a) ;
- ledit composant de serrage et de fixation (4) ayant au moins une partie agencée pour permettre la fixation d'un accessoire, dans lequel ledit au moins un composant de serrage et de fixation (4) comprend un corps intermédiaire (4a) ainsi qu'au moins deux ailettes (4b, 4c), chacune s'étendant à partir d'une partie ou extrémité respective dudit corps intermédiaire (4a), de façon à définir entre elles une zone de logement (HZ) pour lesdits au moins deux composants de préhension et de couplage (3) près d'un panneau (2a, 2b) ou des extrémités superposées (2c, 2d) de deux panneaux adjacents (2a, 2b), chaque ailette (4b1, 4b2) ayant des moyens (4c) pour accoupler les parties d'accouplement (3c) d'un composant de préhension et de couplage (3),
ledit procédé comprenant les étapes suivantes :
- agencement d'au moins un composant de préhension et de couplage (3) reposant contre un côté respectif de la nervure (12), de sorte que la face intérieure (3a) d'au moins un composant de préhension et de couplage (3) repose contre un premier côté (12a) de la nervure (12) et la face intérieure (3a) d'au moins un autre composant de préhension et de couplage (3) repose contre un deuxième côté (12a) de la nervure (12), et ensuite
- transport du composant de serrage et de fixation (4) avec la zone de logement (HZ) respective orientée vers les composants de préhension et de couplage (3) et installation du composant de serrage et de fixation (4) autour des composants de préhension et de couplage (3), de façon à entraîner l'accouplement des parties d'accouplement (3c) et des moyens d'accouplement (4c), ou
- positionnement des parties (40a, 40b) du composant de serrage et de fixation (4) pour envelopper ou se trouver autour des composants de préhension et de couplage (3), puis utilisation ou insertion d'un composant de verrouillage ou d'un composant de rapprochement contrôlé (41, 42) pour serrer les parties (40a, 40b) du composant de serrage et de fixation (4) près des composants de préhension et de couplage (3) de façon à les appuyer contre les côtés de la nervure (12) .
